# DEMANDE DE BREVET EUROPEEN

(11) **EP 0 693 667 A1**
(43) Date de publication de la demande: **24.01.1996**
(21) Numéro de dépôt: 95110945.3
(22) Date de dépôt: 12.07.1995
(51) Int. Cl.: F28F 9/04

(54) **Dispositif de raccordement des tubulures d'entrée et de sortie d'un échangeur de chaleur**

(30) Priorité: 19.07.1994 FR 9408920
(71) Demandeur: VALEO THERMIQUE MOTEUR, F-78320 Le Mesnil Saint-Denis (FR)
(72) Inventeur: Heraud, Philippe, 78000 Versailles (FR)
(74) Mandataire: Gamonal, Didier

(57) **Abrégé**

L'invention concerne un dispositif pour le raccordement simultané d'une tubulure d'entrée (12) et d'une tubulure de sortie (14) d'un échangeur de chaleur aux conduits (18,20) d'un circuit de fluide.

Le dispositif comprend une bride (36) formée de deux moitiés, notamment (36A), réunies entre elles par des faces d'assemblage de formes conjuguées en formant deux ouvertures pour recevoir les extrémités des tubulures (12,14), une contre-bride (38) munie d'ouvertures (72,74) de réception des conduits (18,20), ainsi qu'une vis de serrage (80) propre à rapprocher la bride et la contre-bride.

Application notamment aux condenseurs d'installations de climatisation de véhicule automobile.

## Description

L'invention concerne le raccordement d'un échangeur de chaleur, en particulier d'un condenseur d'une installation de climatisation de véhicule automobile.

Elle concerne plus particulièrement un dispositif pour le raccordement simultané d'une tubulure d'entrée et d'une tubulure de sortie d'un échangeur de chaleur, disposées parallèlement entre elles, à deux conduits de fluide, disposés parallèlement entre eux, comprenant une bride munie de deux ouvertures dont les bords sont propres à s'appuyer sur des bourrelets des tubulures ou des conduits, une contre-bride munie de deux ouvertures dont les bords sont propres à s'appuyer sur des bourrelets des conduits ou respectivement des tubulures, ainsi que des moyens de serrage pour solliciter la bride et la contre-bride l'une vers l'autre en assurant un emboîtement étanche des tubulures et des conduits.

On connaît déjà des dispositifs de ce type qui sont utilisés en particulier pour raccorder les tubulures d'entrée et de sortie d'un condenseur aux autres éléments d'un circuit faisant partie d'une installation de climatisation pour véhicule automobile.

On sait qu'une telle installation comprend un compresseur, un condenseur, un détendeur et un évaporateur parcourus, dans cet ordre, par un fluide réfrigérant.

Généralement, le condenseur est placé à l'avant du véhicule, c'est-à-dire en avant du radiateur de refroidissement du moteur thermique, et il est muni d'une tubulure d'entrée et d'une tubulure de sortie, chacune des tubulures ayant une extrémité solidaire du faisceau de l'échangeur de chaleur et une extrémité libre servant d'extrémité de raccordement.

Le dispositif de raccordement permet alors de raccorder les extrémités libres respectives des tubulures à deux conduits, l'un servant à l'amenée du fluide réfrigérant gazeux provenant du compresseur et l'autre servant à l'évacuation du fluide réfrigérant condensé vers le détendeur.

Dans les dispositifs connus du type précité, la bride sert habituellement à recevoir les tubulures d'entrée et de sortie de l'échangeur de chaleur, tandis que la contre-bride sert habituellement à recevoir les deux conduits du circuit.

Conformément aux solutions connues, la bride est formée d'une seule pièce et, lorsque l'échangeur est en aluminium, elle est également réalisée en aluminium.

La bride est alors obtenue soit par matriçage puis usinage, soit par extrusion et usinage ou tout autre procédé d'élaboration, les tubulures étant alors brasées ou soudées sur la bride.

Ainsi, l'élaboration de la bride et son assemblage aux tubulures de l'échangeur de chaleur nécessitent des opérations longues et coûteuses lors du montage de l'échangeur de chaleur sur le véhicule automobile.

Etant donné que la bride est brasée ou soudée aux tubulures de l'échangeur de chaleur, ceci complique également les opérations en cas de démontage du condenseur, par exemple en vue de son remplacement.

L'invention a notamment pour but de surmonter les inconvénients précités.

Elle propose à cet effet un dispositif de raccordement du type défini en introduction, dans lequel la bride est formée de deux moitiés réunies entre elles par des faces d'assemblage de formes conjuguées, dans laquelle chacune des deux ouvertures de la bride est formée par la réunion de deux demi-ouvertures ménagés respectivement dans les deux moitiés de la bride, et dans laquelle des moyens d'assemblage sont prévus pour assembler les deux moitiés de bride entre elles et maintenir ainsi les tubulures ou respectivement les deux conduits.

L'invention permet ainsi de réaliser une bride en deux parties au lieu d'une bride monobloc, ce qui facilite le montage de la bride autour des deux tubulures, ou respectivement des deux conduits, et son démontage ultérieur éventuel.

En outre, les deux moitiés de bride peuvent être obtenues facilement par moulage, sans faire appel à un procédé d'élaboration complexe et minutieux comme dans le cas des brides monoblocs de la technique antérieure.

En outre, l'assemblage des deux moitiés de bride s'effectue mécaniquement, sans qu'il soit nécessaire de faire appel à un procédé de soudage ou de brasage.

Il en résulte que la connexion de l'échangeur de chaleur, en particulier du type condenseur, aux autres éléments d'un circuit de fluide, est grandement simplifiée.

Dans une forme de réalisation préférée de l'invention, les faces d'assemblage des deux parties de la bride sont généralement planes et définissent ainsi un plan qui contient les axes des ouvertures.

De préférence, les moyens d'assemblage des deux moitiés de bride comprennent deux vis qui traversent une moitié de bride et sont vissées dans l'autre moitié de bride.

Bien entendu, d'autres moyens d'assemblage mécaniques sont envisageables, par exemple par emmanchement en force, clipsage, etc.

Selon une autre caractéristique de l'invention, l'une au moins des deux moitiés de bride comporte une nervure extérieure éventuellement munie d'un bossage.

Cette nervure permet de rigidifier la moitié de bride, et son bossage de fixer la bride à son environnement.

Chacune des ouvertures de la bride a avantageusement une forme de révolution et comporte une partie évasée servant d'appui au bourrelet ou à l'évasement d'une tubulure ou d'un conduit.

De préférence, les moyens de serrage comprennent une vis traversant la contre-bride et coopérant avec un écrou maintenu prisonnier entre les deux moitiés de bride réunies entre elles.

Selon une autre caractéristique de l'invention, les deux moitiés de bride sont formées par moulage d'une matière plastique résistante, par exemple du polypropylène chargé.

Les ouvertures de la contre-bride ont de préférence une forme de révolution, bien que d'autres formes soient envisageables, notamment des formes en U.

Dans une forme de réalisation préférée de l'invention, les ouvertures de la bride sont propres à recevoir les tubulures de l'échangeur de chaleur, tandis que les ouvertures de la contre-bride sont propres à recevoir les conduits.

Ainsi, la bride entoure les deux tubulures de l'échangeur de chaleur.

Dans la description qui suit, faite à titre d'exemple, on se réfère aux dessins annexés, sur lesquels :
- la figure 1 est une vue en élévation d'un condenseur raccordé aux autres éléments d'une installation de climatisation de véhicule automobile au moyen d'un dispositif de climatisation de véhicule automobile au moyen d'un dispositif de raccordement selon l'invention;
- la figure 2 est une vue d'extrémité d'un dispositif de raccordement selon l'invention, (le dispositif étant représenté sans les tubulures et les conduits);
- la figure 3 est une vue en coupe selon la ligne III-III de la figure 2, (le dispositif étant représenté avec les tubulures et les conduits);
- la figure 4 est une vue en coupe transversale d'une extrémité de tubulure;
- la figure 5 est une vue en coupe transversale d'un raccord de tubulure; et - la figure 6 est une vue -- en coupe transversale d'une extrémité de conduit.

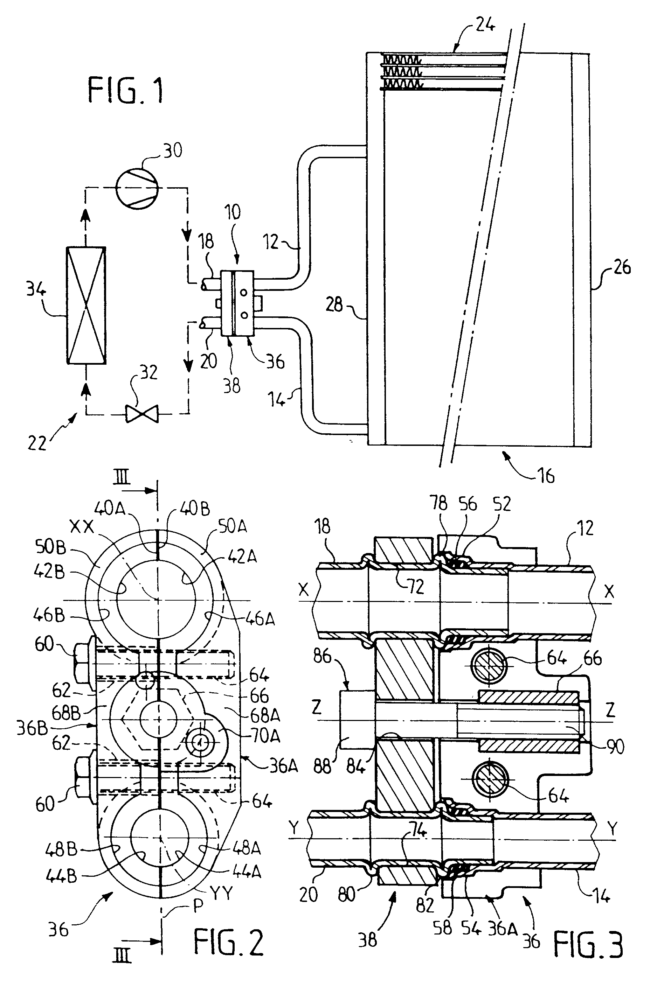

On se réfère tout d'abord à la figure 1 qui montre un dispositif de raccordement 10 permettant de raccorder simultanément une tubulure d'entrée 12 et une tubulure de sortie 14 d'un condenseur 16 respectivement à deux conduits 18 et 20 d'une installation de climatisation 22 pour véhicule automobile.

Le condenseur 16 comprend un faisceau 24 propre à être balayé par un flux d'air et monté entre une boîte collectrice tubulaire 26 et une autre boîte collectrice tubulaire 28 dont les tubulures 12 et 14 sont solidaires.

L'installation 22 comprend en outre un compresseur 30 dont la sortie est reliée au conduit 18, un détendeur 32 dont l'entrée est reliée au conduit 20 et un évaporateur 34 dont l'entrée est reliée au détendeur 32 et la sortie est reliée au compresseur 30.

L'installation 22 est parcourue par un fluide réfrigérant qui traverse, dans cet ordre, le compresseur 30, le condenseur 16, le détendeur 32 et l'évaporateur 34.

Le dispositif 10 est formé principalement d'une bride 36 montée aux extrémités libres des tubulures 12 et 14 et une contre-bride 38 montée aux extrémités libres des conduits 18 et 20.

On se réfère maintenant aux figures 2 et 3 pour décrire plus particulièrement la structure du dispositif 10.

La bride 36 comprend deux moitiés 36A et 36B, réalisées en forme de demi-coquilles sensiblement symétriques, et présentant des faces d'assemblage planes 40A et 40B s'étendant de part et d'autre d'un plan d'assemblage commun P (figure 2).

Le plan P contient deux axes parallèles XX et YY. L'axe XX est un axe d'alignement commun à la tubulure 12 et au conduit 18, tandis que l'axe YY est un axe d'alignement commun à la tubulure 14 et au conduit 20.

Dans la moitié 36A sont pratiquées deux demi-ouvertures 42A et 44A, respectivement d'axe XX et d'axe YY, qui débouchent sur la face d'assemblage 40A.

Dans la moitié 36B sont pratiquées deux demi-ouvertures 42B et 44B, respectivement d'axe XX et d'axe YY, qui débouchent sur la face 40B.

Lorsque les deux moitiés 36A et 36B sont réunies, les demi-ouvertures 42A et 42B définissent ensemble une ouverture en forme de révolution, pour recevoir l'extrémité de la tubulure 12, tandis que les demi-ouvertures 44A et 44B forment ensemble une ouverture complète, en forme de révolution, pour recevoir l'extrémité libre de la tubulure 14.

Les deux demi-ouvertures 42A et 44A comportent des évasements respectifs 46A et 48A débouchant sur une face 50A qui est perpendiculaire à la face 40A.

De même, les demi-ouvertures 42B et 44B présentent des évasements 46B et 48B qui débouchent dans une face 50B coplanaire avec la face 50A.

Les évasements ainsi formés au niveau des bords des deux ouvertures de la bride viennent en appui sur un bourrelet ou évasement 52 de la tubulure 12 et un bourrelet ou évasement 54 de la tubulure 14, les bourrelets 52 et 54 constituant des bords évasés pour recevoir respectivement les extrémités des conduits 18 et 20, avec interposition d'un joint d'étanchéité 56, respectivement 58.

Les deux moitiés 36A et 36B de la bride sont réunies entre elles par deux vis d'assemblage 60 qui traversent respectivement deux trous 62 ménagés dans la moitié 36B et s'engagent ensuite dans des alésages filetés 64 ménagés dans la moitié 36A.

Les moitiés 36A et 36B définissent un logement pour recevoir un écrou hexagonal 66 dont l'axe XX s'étend parallèlement aux axes XX et YY et sensiblement à mi-distance de ces derniers.

Les moitiés 36A et 36B sont, dans l'exemple, formées par moulage d'une matière plastique rigide, par exemple du polypropylène chargé ou de l'ABS.

La moitié 36A comporte une nervure de rigidification 68A munie d'un bossage 70A servant à la fixation de la bride 36 à son environnement dans le véhicule automobile considéré, tandis que la moitié 36B est munie d'une nervure de rigidification 68B, sans bossage.

La contre-bride 38 (figure 3) est réalisée sous la forme d'une plaque allongée présentant deux trous 72 et 74 d'axes respectif s XX et YY, propres à être traversés respectivement par les conduits 18 et 20.

La contre-bride 38 est maintenue axialement par rapport aux conduits 18 et 20 grâce à deux bourrelets 76 et 78 du conduit 18 et à deux bourrelets 80 et 82 du conduit 20. Le -!oint d'étanchéité 56 se trouve ainsi comprimé entre l'évasement 52 de la tubulure 12 et le bourrelet 78 du conduit 18, tandis que le joint d'étanchéité 58 est comprimé entre l'évasement 54 de la tubulure 14 et le bourrelet 82 du conduit 20.

En outre, la contre-bride 38 comprend une ouverture centrale 84 propre à être traversée par une vis de serrage 86 ayant une tête 88 venant s'appuyer sur la contre-bride et une partie filetée 90 venant coopérer avec l'écrou 66.

La contre-bride 38 peut être -obtenue également par moulage d'une matière plastique, ou bien par moulage ou usinage d'un métal ou alliage métallique.

Pour raccorder les tubulures 12 et 14 aux conduits 18 et 20, on met d'abord en place les deux moitiés 36A et 36B de la bride de part et d'autre des tubulures 12 et 14 et on les réunit entre elles par les vis 60.

Par ailleurs, la contre-bride 38 a été au préalable mise en place autour des conduits 18 et 20 et rendue solidaire de ces dernières par les doubles bourrelets 76 et 78 d'une part, et 80 et 82 d'autre part.

Il suffit alors d'engager les extrémités des conduits 18 et 20 dans les extrémités correspondantes des tubulures 12 et 14 avec interposition des joints d'étanchéité respectifs 56 et 58.

Puis on met en place la vis de serrage 86 pour assurer le rapprochement de la bride et de la contre-bride, ce qui provoque la compression des joints d'étanchéité 56 et 58.

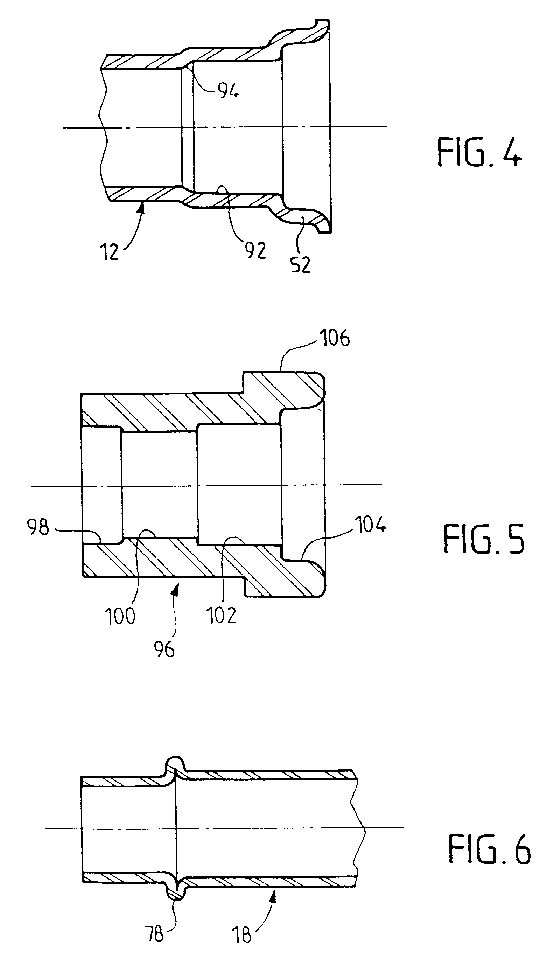

On se réfère maintenant à la figure 4 qui montre la forme de l'extrémité d'une tubulure, dans l'exemple la tubulure 12.

Celle-ci se termine par le bourrelet évasé 52 décrit précédemment et qui est apte à recevoir le joint d'étanchéité 56 (figure 3).

Entre le corps de la tubulure et son extrémité évasée 52 se trouve une section intermédiaire 92 dont le diamètre interne est légèrement supérieur au diamètre externe de l'extrémité terminale du conduit 18, de manière à former un épaulement annulaire 94 propre à limiter l'introduction du conduit 18 dans la tubulure 12.

Dans la forme de réalisation de la figure 5, à laquelle on se réfère maintenant, la tubulure 12 est munie d'un raccord usiné 96 qui est brasé à l'extrémité de la tubulure 12.

Ce raccord 96 comprend successivement un premier alésage 98 propre à recevoir l'extrémité libre de la tubulure 12, un second alésage 100 de diamètre interne plus faible, un troisième alésage 102 dont le diamètre intérieur est légèrement supérieur au diamètre extérieur de l'extrémité du conduit 18 et un quatrième alésage 104 propre à recevoir un joint d'étanchéité.

Le raccord 96 comprend en outre un bourrelet périphérique 106 propre à coopérer avec l'une des ouvertures de la bride.

On se réfère maintenant à la figure 6 qui montre l'un des deux conduits, dans l'exemple le conduit 18, avant mise en place de la contre-bride. Celui-ci comprend déjà le bourrelet 78, l'autre bourrelet 76 devant être formé ultérieurement après introduction du conduit 18 dans l'ouverture 72 de la contre-bride.

Bien entendu, l'invention n'est pas limitée à la forme de réalisation décrite précédemment à titre d'exemple.

Les tubulures d'entrée et de sortie peuvent faire partie d'un échangeur de chaleur qui n'est pas nécessairement un condenseur d'un appareil de climatisation.

En outre, bien que les deux moitiés de la bride soient de préférence situées du côté des deux tubulures, il est possible d'envisager une configuration inverse, dans laquelle ces deux moitiés viennent entourer les extrémités des deux conduits.

## Revendications

1. Dispositif pour le raccordement simultané d'une tubulure A' entrée (12) et d'une tubulure de sortie (14) d'un échangeur de chaleur (16), disposées parallèlement entre elles, à deux conduits de fluide (18,20), disposés parallèlement entre eux, comprenant une bride (36) munie de deux ouvertures dont les bords sont propres à s'appuyer sur des bourrelets (52,54) des tubulures ou des conduits, une contre-bride (38) munie de deux ouvertures (72,74) dont les bords sont propres à s'appuyer sur des bourrelets (78,82) des conduits, respectivement des tubulures, ainsi qu'à des moyens de serrage (86,66) pour solliciter la bride et la contre-bride l'une vers l'autre en assurant un emboîtement étanche des tubulures et des conduits, caractérisé en ce que la bride (36) est formée de deux moitiés (36A,36B) réunies entré elles par des faces d'assemblage (40A,40B) de formes conjuguées, en ce que chacune des deux ouvertures de la bride est formée par la réunion de deux demi-ouvertures (42A,42B; 44A,44B) ménagées respectivement dans les deux moitiés de la bride, et en ce que des moyens d'assemblage (60) sont prévus pour assembler les deux moitiés (36A,36B) de la bride entre elles et maintenir ainsi les tubulures (12,14) ou respectivement les deux conduits (18,20).

2. Dispositif selon la revendication 1, caractérisé en ce que les faces d'assemblage (40A,40B) des deux parties de la bride sont généralement planes et situées de part et d'autre d'un plan commun (P) qui contient les axes (XX,YY) des ouvertures.

3. Dispositif selon l'une des revendications 1 et 2, caractérisé en ce que les moyens d'assemblage des deux moitiés (36A,36B) de la bride comprennent deux vis (60) qui traversent une moitié de bride et sont vissées dans l'autre moitié de bride.

4. Dispositif selon l'une des revendications 1 à 3, caractérisé en ce que l'une au moins des deux moitiés de bride comporte une nervure extérieure (68A,68B) éventuellement munie d'un bossage (70A).

5. Dispositif selon l'une des revendications 1 à 4, caractérisé en ce que chacune des ouvertures de la bride a une forme de révolution et comporte une partie évasée (46A,46B; 48A,48B) servant d'appui aux bourrelets (52,54) d'une tubulure ou d'un conduit.

6. Dispositif selon l'une des revendications 1 à 50, caractérisé en ce que les moyens de serrage comprennent une vis (86) traversant la contre-bride (38) et coopérant avec un écrou (66) maintenu prisonnier entre les deux moitiés de bride (36A,36B) réunies.

7. Dispositif selon l'une des revendications 1 à 6, caractérisé en ce que les deux moitiés de bride (36A,36B) sont formées par moulage d'une matière plastique résistante.

8. Dispositif selon l'une des revendications 1 à 7, caractérisé en ce que les ouvertures (72,74) de la contre-bride (38) ont une forme de révolution.

9. Dispositif selon l'une des revendications 1 à 8, caractérisé en ce que les ouvertures de la bride (36) sont propres à recevoir les tubulures (12,14) de l'échangeur de chaleur (16), tandis que les ouvertures (72,74) de la contre-bride (38) sont propres à recevoir les conduits (18,20).
